# EUROPÄISCHE PATENTANMELDUNG

(11) **EP 3 954 558 A1**
(43) Veröffentlichungstag der Anmeldung: **16.02.2022**
(21) Anmeldenummer: 21188377.2
(22) Anmeldetag: 29.07.2021
(51) Int. Cl.: B60G 9/00, B60K 25/08

(54) **ABSTÜTZANORDNUNG, INSBESONDERE FÜR EINEN ANHÄNGER**

(30) Priorität: 13.08.2020 DE 102020121320
(71) Anmelder: SAF-HOLLAND GmbH, 63856 Bessenbach (DE)
(72) Erfinder: Hartmann, Mark, 63869 Heigenbrücken (DE)
(74) Vertreter: Müller Schupfner & Partner Patent- und Rechtsanwaltspartnerschaft mbB

(57) **Zusammenfassung**

Abstützanordnung (1), insbesondere für einen Anhänger, umfassend ein Achsabstützelement (10) und eine Rekuperationsvorrichtung (20), wobei das Achsabstützelement (10) dazu ausgelegt ist, eine Achse (30) abzustützen, wobei die Rekuperationsvorrichtung (20) dazu ausgelegt ist, eine kinetische Energie, insbesondere eines Rades (80), in elektrische Energie umzuwandeln, wobei die Rekuperationsvorrichtung (20) mittel und/oder unmittelbar am Achsabstützelement (10) gelagert ist.

## Beschreibung

Die Erfindung betrifft eine Abstützanordnung, insbesondere für einen Anhänger bzw. Nutzfahrzeuganhänger.

Abstützanordnungen sind bereits aus dem Stand der Technik bekannt. Diese dienen dazu, Achsen oder Wellen eines Fahrzeugs gegenüber einem Rahmen oder einer Karosserie abzustützen. Problematisch bei modernen Fahrzeugen ist, dass diese elektrische Energie benötigen, um gewisse Verbraucher in dem Fahrzeug zu betreiben, insbesondere z.B. die Beleuchtungseinheit und/oder den elektrischen Fahrantrieb. Dies gilt unter anderem auch für Anhänger, wie z.B. Sattelauflieger. Bei den bereits bekannten Anhängern wird teilweise die Energieversorgung durch einen Verbrennungsmotor bereitgestellt. Darüber hinaus ist es auch noch bekannt, einen Generator in der Achsnabe oder an dem Rahmen des Anhängers anzuordnen, um eine Bereitstellung von elektrischer Energie zu erreichen. Alle diese Anordnungen sind jedoch kostenaufwendig, führen zu einer Schwächung des Rahmens und/oder erfordern, insbesondere bei einer Nachrüstung des Fahrzeugs, eine erhebliche konstruktive Änderung.

Es ist daher Aufgabe der Erfindung, in einfacher und kostengünstiger Weise eine elektrische Energieversorgung eines Fahrzeugs, insbesondere eines Anhängers bzw. Nutzfahrzeuganhängers, bereitzustellen.

Diese Aufgabe wird mit einer Abstützanordnung gemäß dem Anspruch 1 gelöst. Vorteilhafte Merkmale und Weiterbildungen ergeben sich aus den Unteransprüchen, den Figuren sowie aus der Beschreibung.

Erfindungsgemäß umfasst eine Abstützanordnung, insbesondere für einen Anhänger bzw. Nutzfahrzeuganhänger, ein Achsabstützelement und eine Rekuperationsvorrichtung, wobei das Achsabstützelement dazu ausgelegt ist, eine Achse abzustützen, wobei die Rekuperationsvorrichtung dazu ausgelegt ist, eine kinetische Energie, insbesondere eines Rades, in elektrische Energie umzuwandeln, wobei die Rekuperationsvorrichtung mittel- und/oder unmittelbar am Achsabstützelement gelagert ist. Die erfindungsgemäße Abstützanordnung dient dabei dazu, eine Achse, insbesondere eines Anhängers oder eines Nutzfahrzeugs, abzustützen bzw. zu lagern, insbesondere gegenüber einem Rahmen des Fahrzeugs bzw. des Nutzfahrzeugs und/oder gegenüber einer Karosserie des Fahrzeugs. Vorteilhafterweise ist die Abstützanordnung dabei eine Nutzfahrzeuganhängerabstützanordnung. In anderen Worten bedeutet dies, dass die Abstützanordnung dazu ausgelegt und dazu bestimmt ist, eine Achse eines Nutzfahrzeuganhängers, insbesondere eines Sattelaufliegers, abzustützen. Ein Nutzfahrzeug im Sinne der Erfindung ist dabei ein Fahrzeug mit einem zulässigen Gesamtgewicht von mindestens 7,51 Tonnen, bevorzugt von mindestens 15,1 Tonnen und besonders bevorzugt von mindestens 20,1 Tonnen, daher sind insbesondere PKWs oder PKW-Anhänger, wie z.B. Wohnwagen, insbesondere keine Nutzfahrzeuge. Aufgrund dieser Gewichte sollte daher eine Nutzfahrzeuganhängerabstützanordnung derart ausgelegt sein, dass diese Achsen mit einer Achslast von mindestens 3 Tonnen, bevorzugt von mindestens 5 Tonnen und besonders bevorzugt von mindestens 6 Tonnen abstützt bzw. abstützen kann. Die Abstützanordnung umfasst zumindest ein Achsabstützelement und eine Rekuperationsvorrichtung. Das Achsabstützelement ist dazu ausgelegt, eine Achse oder eine Welle gegenüber einem Fahrzeugrahmen oder gegenüber einer Fahrzeugkarosserie abzustützen. Hierzu verfügt das Achsabstützelement insbesondere über eine oder eine Vielzahl von Montageflächen, um Kräfte und/oder Momente auf den Fahrzeugrahmen oder die Fahrzeugkarosserie übertragen zu können. Das Achsabstützelement kann, insbesondere mittels der Montageflächen, sowohl kraftschlüssig, formschlüssig und/oder stoffschlüssig am Fahrzeugrahmen oder der Fahrzeugkarosserie festgelegt oder festlegbar sein. Die Rekuperationsvorrichtung der Abstützanordnung dient dazu, eine kinetische, insbesondere eine rotatorische, Energie in elektrische Energie umzuwandeln. Daher kann die Rekuperationsvorrichtung ein Generator sein oder einen solchen umfassen. Die umzuwandelnde kinetische Energie ist insbesondere die Rotationsenergie eines durch die Abstützanordnung abzustützendes Rades einer Achse oder einer Wellenanordnung. In anderen Worten ist die Rekuperationsvorrichtung der Abstützanordnung insbesondere dazu ausgelegt, die rotatorische Energie eines Rades in elektrische Energie umzuwandeln, um so elektrische Energie beispielsweise für einen Anhänger, insbesondere für einen Nutzfahrzeuganhänger, und dessen Verbrauch bereitzustellen. Die erfindungsgemäße Rekuperationsvorrichtung ist dabei mittel- und/oder unmittelbar am Abstützelement gelagert. Unter einer mittel- und/oder unmittelbaren Lagerung am Abstützelement ist dabei insbesondere zu verstehen, dass die Rekuperationsvorrichtung sich, vorteilhafterweise ausschließlich, am Achsabstützelement abstützt. In anderen Worten kann unter "mittel- und/oder unmittelbar am Abstützelement gelagert" verstanden werden, dass die Rekuperationsvorrichtung durch das Achsabstützelement gehalten ist.

Vorteilhafterweise ist das Achsabstützelement ein Haltebock. Hierdurch kann eine besonders sichere und mechanisch belastbare Abstützung erreicht werden. Ein Haltebock ist insbesondere ein Achsabstützelement für Nutzfahrzeuge. Vorteilhafterweise bildet dabei der Haltebock zusammen mit einer Luftfeder, insbesondere ausschließlich, die Anbindung der Achse gegenüber dem Fahrzeugrahmen oder der Fahrzeugkarosserie aus. Der Haltebock weist vorteilhafterweise zwei gegenüberliegende Seitenwände auf und eine - meist in Fahrtrichtung liegende - die beiden Seitenwände verbindende Stirnwand, wobei die Seitenwände vorteilhafterweise zumindest bereichsweise parallel zueinander ausgebildet sind. Die beiden Seitenwände des Haltebocks verfügen insbesondere jeweils über Lagerelemente, vorteilhafterweise in Form von Durchbrüchen, zum schwenkbaren lagern eines Lenkers, insbesondere eines Längslenkers. Durch diese Art der Ausbildung des Haltebocks wird eine besonders stabile und mechanisch belastbare Anordnung erreicht. Zur Festlegung von Fahrwerksabstützelementen und/oder der Rekuperationsvorrichtung weist der Haltebock insbesondere Montagestrukturen in den Seitenwänden und/oder der Stirnwand auf. Die Haltestrukturen können dabei beispielsweise Öffnungen, Durchbrüche und/oder Bohrungen sein. Zweckmäßigerweise kann der Haltebock Lasten von mehr als 1 Tonne, bevorzugt von mehr als 3 Tonnen und besonders bevorzugt von mehr als 5 Tonnen abstützen.

Vorteilhafterweise umfasst die Abstützanordnung einen Lenker, insbesondere einen Längslenker, wobei der Lenker dazu ausgelegt ist, Kräfte und/oder Momente zwischen einer Achse und dem Achsabstützelement zu übertragen. Durch das Vorsehen eines Lenkers kann in besonders einfacher und kostengünstiger Weise eine Anbindung der Achse realisiert werden. Der Lenker weist vorteilhafterweise zumindest einen Anschlussbereich für eine Achse auf. Dieser Anschlussbereich kann insbesondere derart gestaltet sein, dass dieser eine Aufnahmeöffnung bzw. einen Aufnahmedurchbruch für eine Achse aufweist. Vorteilhafterweise ist der Lenker dabei einstückig ausgebildet, um eine hohe Belastbarkeit zu erreichen. Um eine besonders kostengünstige Abstützung zu erreichen, ist der Lenker vorzugsweise ein Längslenker. Des Weiteren ist es bevorzugt, dass der Lenker, insbesondere der Längslenker, einen Anschlussbereich für eine Luftfeder aufweist. Hierdurch kann eine besonders kompakte Achsabstützung erreicht werden, da der Lenker dazu ausgelegt ist, eine Vielzahl von technischen Funktionen zu erfüllen.

Es ist bevorzugt, dass die Abstützanordnung eine Luftfeder umfasst, welche insbesondere am Lenker angeordnet sein kann. Hierdurch kann eine besonders kompakte und mechanische Abfederung der Achse erreicht werden.

In einer bevorzugten Ausführungsform ist der Lenker schwenkbar um eine Querachse am und/oder im Achsabstützelement gelagert. Hierdurch kann eine gewisse Beweglichkeit der abzustützenden Achse relativ zum Achsabstützelement erreicht werden, sodass insbesondere eine Federbewegung der Achse relativ zum Fahrzeugrahmen oder zur Fahrzeugkarosserie ermöglicht werden kann. Vorteilhafterweise wird diese Drehachse durch einen Bolz realisiert bzw. ausgebildet, der sich durch die Seitenwände, insbesondere durch Durchbrüche, der Achsabstützung erstreckt. Hierdurch kann in besonders kompakter und mechanisch belastbarer Weise eine Schwenkbarkeit des Lenkers relativ zum Achsabstützelement erreicht werden. Die Querachse, um welche der Lenker relativ zum Achsabstützelement schwenkbar ist, ist vorteilhafterweise - in einem eingebautem Zustand der Abstützanordnung - parallel zu der Breitenrichtung des Fahrzeugs orientiert. In anderen Worten ist die Querachse vorteilhafterweise parallel zu derjenigen Richtung, in welcher sich die Breite des Fahrzeugs bemisst.

Vorteilhafterweise umfasst die Rekuperationsvorrichtung eine Haltevorrichtung, wobei die Haltevorrichtung dazu ausgelegt ist, die Rekuperationsvorrichtung am Achsabstützelement abzustützen, wobei die Haltevorrichtung das Achsabstützelement vorteilhafterweise zumindest teilweise umgibt, insbesondere in Richtung der Querachse. Hierdurch kann eine besonders sichere Lagerung der Rekuperationsvorrichtung an dem Achsabstützelement erreicht werden. Unter einem zumindest teilweise Umgeben des Achsabstützelements durch die Haltevorrichtung kann dabei verstanden werden, dass die Haltevorrichtung das Achsabstützelement zumindest teilweise derart umschließt, dass die Haltevorrichtung sich in einer Richtung gesehen beidseits zu dem Achsabstützelement erstreckt. Vorteilhafterweise ist die Haltevorrichtung dabei U-förmig ausgestaltet und/oder umfasst zwei Haltevorrichtungsseitenwände und eine Haltevorrichtungsstirnwand, wobei die Haltevorrichtungsseitenwände durch die Haltevorrichtungsstirnwand miteinander verbunden sind. Hierdurch kann eine besonders kompakte und mechanisch belastbare Abstützung erreicht werden. Besonders zweckmäßig ist es, wenn die Haltevorrichtungsseitenwände jeweils parallel zu den Seitenwänden des Achsabstützelements orientiert sind. Hierdurch kann eine besonders kompakte Abstützung erreicht werden.

Vorteilhafterweise umfasst die Abstützanordnung eine Achse und ein Rad, wobei die Achse sich in eine Längsrichtung erstreckt, wobei das Rad eine Felge und einen Reifen mit einer Lauffläche aufweist, wobei die Achse dazu ausgelegt ist, das Rad mittel- oder unmittelbar zu lagern, wobei die Rekuperationsvorrichtung direkt oder indirekt energietechnisch mit dem Rad verbunden ist. Unter einem "energietechnischen Verbinden" ist zu verstehen, dass die Rekuperationsvorrichtung derart mit dem Rad oder dem Reifen verbunden ist, dass die Rekuperationsvorrichtung die kinetische, insbesondere die rotatorische, Energie des Rades als Eingangsenergie zur Umwandlung in elektrische Energie nutzt. In anderen Worten kann dies bedeuten, dass die Rekuperationsvorrichtung derart mit dem Rad oder dem Reifen mechanisch verbunden ist, dass diese die kinetische Energie des Rades oder des Reifens nutzt, um elektrische Energie zu gewinnen bzw. in elektrische Energie umzuwandeln.

Besonders vorteilhaft ist es, wenn die Abstützanordnung auch eine Bremsvorrichtung aufweist, insbesondere in Form einer Trommelbremse oder einer Scheibenbremse, um das zu lagernde Rad abzubremsen. Diese Bremsvorrichtung kann dabei insbesondere mittel oder unmittelbar an der Achse gelagert sein.

In einer vorteilhaften Weiterbildung ist die Rekuperationsvorrichtung durch ein Übertragungsmittel, insbesondere einen Riemen, energietechnisch mit dem Rad verbunden. In anderen Worten kann die Rekuperationsvorrichtung durch ein Übertragungsmittel, insbesondere einen Keilriemen, derart mechanisch mit dem Rad mittel- oder unmittelbar verbunden sein, sodass über dieses Übertragungsmittel mechanische Energie von dem Rad an die Rekuperationsvorrichtung übertragbar ist. Hierdurch kann eine gewisse Distanzierung zwischen der Rekuperationsvorrichtung und dem Rad erreicht werden, sodass die Rekuperationsvorrichtung gegenüber mechanischen Beschädigungen, beispielsweise bei einem Platzen des Reifens, geschützt ist. In einer bespielhaften Ausführungsform kann die Rekuperationsvorrichtung eine Riemenscheibe aufweisen und das Rad bzw. die Felge des Rades ebenfalls eine Riemenscheibe aufweisen und/oder ausbilden, wobei diese Riemenscheiben über einen Riemen, insbesondere einen Keilriemen, einen Zahnriemen oder einen Flachriemen, miteinander verbunden sind, sodass die Rekuperationsvorrichtung die rotatorische Energie des Rades in elektrische Energie umwandeln kann.

Zweckmäßigerweise weist die Rekuperationsvorrichtung eine Rolle oder eine Abrollvorrichtung auf, wobei die Rolle oder die Abrollvorrichtung drehbar um eine Rollenachse gelagert ist, wobei die Rolle oder die Abrollvorrichtung energietechnisch mit dem Rad verbunden ist und/oder verbindbar ist. In anderen Worten kann die Rekuperationsvorrichtung eine Rolle oder eine andere Abrollvorrichtung aufweisen, die insbesondere als ein Übertragungsmittel zur Aufnahme bzw. zur Übertragung von kinetischer Energie des Rades dient. Die Rolle bzw. die Abrollvorrichtung ist dabei drehbar um eine Rollenachse gelagert, sodass die Rolle bzw. die Abrollvorrichtung in der Lage ist, um die Rollenachse zu rotieren. Vorteilhafterweise erfolgt diese Lagerung der Rolle bzw. der Abrollvorrichtung mittel- oder unmittelbar gegenüber dem Achsabstützelement. Besonders vorteilhaft ist es dabei, wenn die Rollenachse der Rolle bzw. der Abrollvorrichtung parallel zur Rotationsachse des Rades und/oder zur Längsrichtung der Achse ist. Hierdurch kann eine besonders kompakte rekuperationsfähige Abstützanordnung erreicht werden, welche nur einen geringen Schlupf aufweist.

Zweckmäßigerweise ist die Rolle bzw. die Abrollvorrichtung derart angeordnet, dass diese durch einen Kontakt mit der Lauffläche des Rades energietechnisch verbindbar und/oder verbunden ist. In anderen Worten kann dies bedeuten, dass die Rolle bzw. die Abrollvorrichtung der Rekuperationsvorrichtung dazu ausgelegt ist, mit einer Lauffläche des Rades bzw. mit einer Lauffläche des Reifen des Rades zu kontaktieren, um durch diesen Kontakt kinetische Energie von dem Rad auf die Rolle zu übertragen. Vorteilhafterweise erfolgt dieser Kontakt dabei unmittelbar. Durch diesen Kontakt zwischen der Rolle und der Lauffläche des Rades bzw. des Reifens des Rades kann eine besonders kompakte und bauraumsparende sowie kostengünstige Energieübertragung von dem Rad auf die Rekuperationsvorrichtung erreicht werden.

Vorteilhafterweise liegt das Übersetzungsverhältnis zwischen der Rolle bzw. der Abrollvorrichtung und dem Rad in einem Bereich von 1:10 bis 1:50, bevorzugt in einem Bereich von 1:20 bis 1:30. Durch die im Vergleich zu dem Rad mögliche geringe Größe der Abrollvorrichtung bzw. der Rolle kann ein besonders großes Übersetzungsverhältnis erzielt werden, insbesondre von mindestens 1:10, bevorzugt von mindestens 1:20. Dies führt gerade dazu, dass ein Generator direkt - ohne ein Übersetzungsgetriebe - mit der Abrollvorrichtung bzw. der Rolle verbunden werden kann, sodass besonders geringe Kosten erreicht werden können.

Vorteilhafterweise ist die Rekuperationsvorrichtung und/oder Teile der Rekuperationsvorrichtung schwenkbar um eine Schwenkachse an dem Achsabstützelement gelagert. In anderen Worten kann dies bedeuten, dass die Rekuperationsvorrichtung oder zumindest gewisse Bestandteile der Rekuperationsvorrichtung, insbesondere die Rolle, schwenkbar um die Schwenkachse am Achsabstützelement gelagert sind/ist. Dies ist insbesondere deshalb vorteilhaft, da hierdurch ermöglicht wird, dass die Rekuperationsvorrichtung zwischen verschiedenen Stellungen verschwenkt werden kann, insbesondere in eine Stellung, in welcher die Rekuperationsvorrichtung mit dem Rad energietechnisch verbunden ist, und in eine Stellung, in welcher die Rekuperationsvorrichtung mit dem Rad nicht energietechnisch verbunden ist. Hierdurch kann in besonders einfacher Weise eine Rekuperation ermöglicht bzw. verhindert werden. Darüber hinaus kann durch die Verschwenkbarkeit der Rekuperationsvorrichtung auch noch erreicht werden, dass die Rekuperationsvorrichtung gewissen Einfeder- bzw. Ausfederbewegungen des Rades und/oder der Achse bzw. der Welle folgen kann.

In einer vorteilhaften Weiterbildung ist die Rollenachse parallel zu der Längsrichtung und/oder zu der Schwenkachse. Durch diese parallele Ausrichtung der Rollenachse zu der Längsrichtung und/oder zu der Schwenkrichtung resultiert eine besonders kompakte und bauraumsparende rekuperationsfähige Abstützanordnung für eine Achse.

Zweckmäßigerweise ist/sind die Rekuperationsvorrichtungen oder Teile der Rekuperationsvorrichtung derart schwenkbar gelagert, dass diese in eine Rekuperationsstellung und in eine Leerlaufstellung schwenkbar ist/sind. Bei einer Verschwenkung in die Rekuperationsstellung ist die Rekuperationsvorichtung derart positioniert, dass diese kinetische Energie von dem abzustützenden Rad aufnehmen kann. In anderen Worten ist die Rekuperationsvorrichtung daher in der Rekuperationsstellung "energietechnisch verbunden" mit dem abzustützenden Rad. Befindet sich die Rekuperationsvorrichtung bzw. Teile der Rekuperationsvorrichtung jedoch in der Leerlaufstellung, so ist die Rekuperationsvorrichtung gerade nicht energietechnisch mit dem Rad verbunden. In anderen Worten kann dies bedeuten, dass in der Leerlaufstellung keine "energietechnische Verbindung" zwischen dem Rad und der Rekuperationsvorrichtung besteht. Durch dieses Verschwenken der Rekuperationsvorrichtung kann erreicht werden, dass die Rekuperationsvorrichtung je nach Bedarf in die Rekuperationsstellung, zum Rekuperieren von Energie, oder in die Leerlaufstellung verschwenkt werden kann. Dies ist insbesondere dann vorteilhaft, wenn eine nicht dauerhaft Rekuperation gewünscht ist, denn hierdurch können insbesondere die in der Rekuperationsvorrichtung auftretenden Reibungsverluste vermieden werden, sodass eine besonders energetisch vorteilhafte Abstützung des Rades erfolgen kann. Die Rekuperationsvorrichtung kann dabei bei einem Verzögerungswunsch in die Rekuperationsstellung oder auch bei einem Energiebedarf in diese Stellung gebracht werden.

Vorteilhafterweise umfasst die Abstützanordnung eine Schwenkvorrichtung, wobei die Schwenkvorrichtung dazu ausgelegt ist, die Rekuperationsvorrichtung oder Teile davon relativ zum Achsabstützelement um die Schwenkachse zu verschwenken. Die Schwenkvorrichtung dient daher - in anderen Worten - dazu, ein automatisches Verschwenken der Rekuperationsvorrichtung relativ zum Achsabstützelement zu erreichen. Die Schwenkvorrichtung kann beispielsweise eine Feder, ein Zylinder oder einen Luftfederbalg umfassen oder sein. Vorteilhafterweise ist die Schwenkvorrichtung derart ausgestaltet, dass diese permanent ein Vorspannungsschwenkmoment, insbesondere durch eine Feder der Schwenkvorrichtung, auf die Rekuperationsvorrichtung oder auf die zu verschwenkenden Teile der Rekuperationsvorrichtung ausübt, sodass die Rekuperationsvorrichtung in eine Richtung, insbesondere in Richtung der Leerlaufstellung, vorgespannt ist. Hierdurch kann erreicht werden, dass bei einem Energieausfall die zu verschwenkenden Teile der Rekuperationsvorichtung oder die gesamte Rekuperationsvorrichtung in eine definierte Stellung, insbesondere in die Leerlaufstellung, verschwenkt wird, insbesondere um Beschädigungen der Rekuperationsvorrichtung zu verhindern.

Vorteilhafterweise umfasst die Schwenkvorrichtung einen Luftbalg, wobei der Luftbalg insbesondere dazu ausgelegt ist, die Rekuperationsvorrichtung und/oder Teile der Rekuperationsvorrichtung von der Leerlaufstellung in die Rekuperationsstellung zu verschwenken. Durch das Vorsehen eines Luftbalgs kann erreicht werden, dass in besonders bauraumsparender Weise eine Verschwenkung der Rekuperationsvorrichtung und/oder von Teilen der Rekuperationsvorichtung erreicht werden kann. Darüber hinaus ist ein Luftbalg auch noch aufgrund des Umstandes vorteilhaft, dass für den Luftbalg das Druckluftsystem des Fahrzeugs als Energiequelle genutzt werden kann. Daher müssen keine weiteren zusätzlichen schweren Bauteile vorgesehen werden, um die Verschwenkung zu erreichen. Alternativ oder zusätzlich bevorzugt kann die Schwenkvorrichtung auch einen Druckluftzylinder aufweisen. Durch das Verwenden eines Luftbalgs und/oder eines Druckluftzylinders als Mittel zur Verschwenkung, insbesondere von der Leerlaufstellung in die Rekuperationstellung, kann ein besonders schnelles Verfahren erreicht werden und darüber hinaus kann hierdurch auch noch erreicht werden, dass durch die Kompressibilität der Luft eine gewisse Toleranzausgleichswirkung erzielt werden kann.

Zweckmäßigerweise ist der Luftbalg und/oder der Druckluftzylinder zwischen dem Achsabstützelement und der Haltevorrichtung angeordnet und/oder wobei der Luftbalg und/oder der Druckluftzylinder zwischen Teilen der Rekuperationsvorrichtung angeordnet ist. Unter "zwischen dem Achsabstützelement und der Haltevorrichtung" kann dabei verstanden werden, dass der Luftbalg und/oder der Druckluftzylinder sich zum einen am Achsabstützelement und zum anderen an der Haltevorrichtung abstützt. Hierdurch kann eine besonders bauraumsparende Verschwenkung erreicht werden. Drüber hinaus kann hierdurch auch noch erreicht werden, dass keinerlei Anpassungen des Fahrzeugs selbst erfolgen muss, um die erfindungsgemäße Abstützanordnung in einem bereits vorhandenen Fahrzeug nachzurüsten.

Vorteilhafterweise umfasst die Schwenkvorrichtung eine Rückstellvorrichtung, insbesondere eine Feder oder einen Luftbalg, vorteilhafterweise einen zweiten Luftbalg, wobei die Rückstellvorrichtung insbesondere dazu ausgelegt ist, die Rekuperationsvorrichtung und/oder Teile der Rekuperationsvorrichtung von der Rekuperationsstellung in die Leerlaufstellung zu verschwenken. Durch die Verwendung der Rückstellvorrichtung kann eine gezielte Rückstellung, insbesondere in die Leerlaufstellung, erreicht werden. Durch das Verwenden einer Feder als Rückstellvorrichtung kann erreicht werden, dass auch bei einem Energieausfall ein sicheres Rückstellen der Rekuperationsvorrichtung bzw. von Teilen der Rekuperationsvorrichtung erfolgt. Hierdurch kann die Betriebssicherheit der rekuperationsfähigen Anordnung deutlich erhöht werden.

Alternativ oder zusätzlich bevorzugt kann die Rekuperationsvorrichtung und/oder Teile der Rekuperationsvorrichtung verschieblich entlang einer Verschiebungsachse an und/oder relativ zu dem Achsabstützelement gelagert sein. Hierdurch können grundlegend ähnliche Vorteile erreicht werden, wie durch die schwenkbare Lagerung. In anderen Worten können die obig dargelegten Mittel, Merkmale und Vorteile in Bezug zu der Verschwenkung, insbesondere zwischen der Leerlaufstellung und der Rekuperationsstellung, auch durch eine lineare Verlagerung erreicht werden. Grundlegend ist jedoch eine Verschwenkung meist vorteilhafter als eine Verschiebung, denn hierdurch kann eine kompaktere Anordnung erreicht werden.

Ein weiterer Aspekt der Erfindung betrifft ein Nutzfahrzeug umfassend eine Abstützvorrichtung wie vorhergehend und nachfolgend beschrieben. Vorteilhafterweise ist das Nutzfahrzeug ein Tanker oder ein Silo-Fahrzeug, insbesondere ein Tankanhänger oder ein Siloanhänger. Durch die geringe Bauhöhe der Abstützvorrichtung kann diese einfach an Fahrzeugen mit Rohrleitungen montiert werden. Fahrzeuge mit derartigen Rohrleitung sind dabei insbesondere Tanker- oder Silo-Fahrzeuge. Die Anhänger können dabei insbesondere Sattelauflieger sein.

Ein weiterer Aspekt der Erfindung kann ein Verfahren zur Nachrüstung eines Fahrzeugs, insbesondere eines Nutzfahrzeugs, mit einer Abstützvorrichtung wie vorhergehend und nachfolgend beschrieben betreffen.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde. Es zeigen:
- Figur 1: eine erfindungsgemäße Teilschnittansicht einer Abstützanordnung;
- Figur 2: eine Seitenansicht einer erfindungsgemäßen Abstützanordnung.

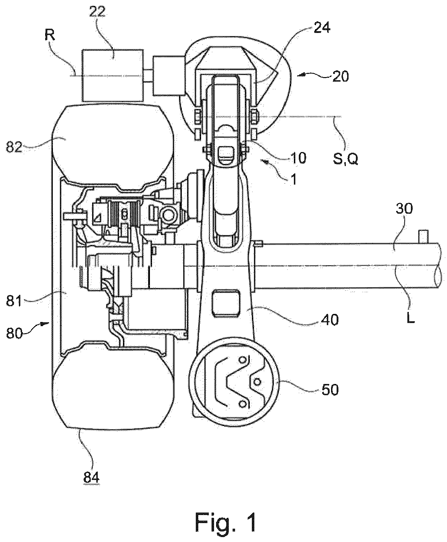

In der **Figur 1** ist eine Teilschnittansicht einer erfindungsgemäßen Abstützanordnung 1 gezeigt. Die Abstützanordnung 1 verfügt dabei über ein Achsabstützelement 10 in Form eines Haltebocks. Dieser Haltebock 10 dient dazu, die Achse 30 über den Lenker 40, welche bei der in Figur 1 dargestellten Ausführungsform ein Längslenker ist, gegenüber einem nicht dargestellten Nutzfahrzeuganhängerrahmen abzustützen. Die Achse 30 erstreckt sich in Längsrichtung L, wobei an dem distalen Ende der Achse 30 das Rad 80 rotierbar um die Längsrichtung L gelagert ist. Wie in der Figur 1 erkennbar - ist die erfindungsgemäße Abstützanordnung 1 sowohl für Achsen 30 mit Scheibenbremsen als auch für Achsen 30 mit Trommelbremsen einsetzbar. Das Rad 80 verfügt über eine Felge 81, sowie über einen Reifen 82, wobei der Reifen 82 eine Lauffläche 84 aufweist. Die Rekuperationsvorrichtung 20 verfügt über eine Rolle 22, die drehbar um eine Rollenachse R gelagert ist. In der in Figur 1 dargestellten Situation ist die Rolle 22 kontaktierend mit der Lauffläche 84 des Reifens 82. Daher befindet sich die Rekuperationsvorrichtung 20 in der Figur 1 in der Rekuperationsstellung. Die Rekuperationsvorrichtung 20 ist über die Haltevorrichtung 24 am Achsabstützelement 10 schwenkbar um die Schwenkachse S gelagert. Die Haltevorrichtung 24 umgibt dabei das Achsabstützelement 10 in Richtung der Schwenkachse S. Die Schwenkachse S ist dabei parallel zu der Querachse Q orientiert.

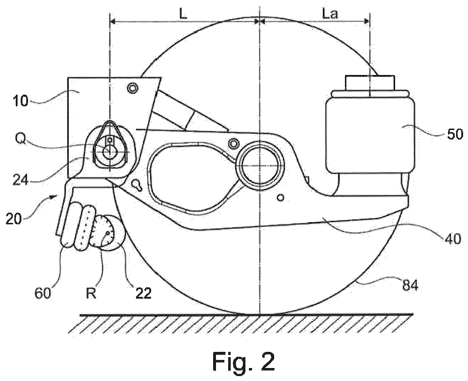

In der **Figur 2** ist eine Seitenansicht einer erfindungsgemäßen Abstützanordnung 1 gezeigt. Die in der Figur 2 gezeigte Abstützanordnung 1 kann dabei prinzipiell die in der Figur 1 dargestellte Vorrichtung aus einer anderen Perspektive sein oder mit Merkmalen der Abstützanordnung 1 aus Figur 1 aufweisen. Die Abstützanordnung 1 verfügt über ein Achsabstützelement 10 in Form eines Haltebocks. Der Haltebock 10 lagert den Lenker 40 schwenkbar um die Querachse Q, wobei diese Lagerung durch einen Lagerbolzen realisiert ist. Der Lenker 40 verfügt über einen Luftfederabstützbereich um die Luftfeder 50 abzustützen. Die Rekuperationsvorrichtung 20 ist über deren Haltevorrichtung 24 am Achsabstützelement 10 gelagert. Die Rekuperationsvorrichtung 20 verfügt über eine Schwenkvorrichtung 60 in Form eines Luftbalgs, durch welchen die Rolle 22 schwenkbar gegenüber dem Achsabstützelement 10 ist. Die Rolle 22 der Rekuperationsvorrichtung 20 ist in der dargestellten Situation kontierend mit der Lauffläche 84 des Rades 80 bzw. des Reifens 82 des Rades 80.

### Bezugszeichenliste:

- 1: - Abstützanordnung
- 10: - Achsabstützelement
- 20: - Rekuperationsvorrichtung
- 22: - Rolle
- 24: - Haltevorrichtung
- 30: - Achse
- 40: - Lenker
- 50: - Luftfeder
- 60: - Schwenkvorrichtung
- 80: - Rad
- 81: - Felge
- 82: - Reifen
- 84: - Lauffläche
- L: - Längsrichtung
- Q: - Querachse
- R: - Rollenachse
- S: - Schwenkachse

## Patentansprüche

1. Abstützanordnung (1), insbesondere für einen Anhänger, umfassend ein Achsabstützelement (10) und eine Rekuperationsvorrichtung (20),
wobei das Achsabstützelement (10) dazu ausgelegt ist, eine Achse (30) abzustützen,
wobei die Rekuperationsvorrichtung (20) dazu ausgelegt ist, eine kinetische Energie, insbesondere eines Rades (80), in elektrische Energie umzuwandeln,
wobei die Rekuperationsvorrichtung (20) mittel und/oder unmittelbar am Achsabstützelement (10) gelagert ist.

2. Abstützanordnung (1) gemäß Anspruch 1,
wobei das Achsabstützelement (10) ein Haltebock ist.

3. Abstützanordnung (1) gemäß einem der vorhergehenden Ansprüche,
wobei die Abstützanordnung (1) einen Lenker (40), insbesondere einen Längslenker, umfasst,
wobei der Lenker (40) dazu ausgelegt ist, Kräfte und/oder Momente zwischen einer Achse (30) und dem Achsabstützelement (10) zu übertragen.

4. Abstützanordnung (1) gemäß Anspruch 3,
wobei der Lenker (40) schwenkbar um eine Querachse (Q) am Achsabstützelement (10) gelagert ist.

5. Abstützanordnung (1) gemäß einem der vorhergehenden Ansprüche,
wobei die Rekuperationsvorrichtung (20) eine Haltevorrichtung (24) umfasst,
wobei die Haltevorrichtung (24) dazu ausgelegt ist, die Rekuperationsvorrichtung (20) am Achsabstützelement (10) abzustützen,
wobei die Haltevorrichtung (24) das Achsabstützelement (10) zumindest teilweise umgibt, insbesondere in Richtung der Querachse (Q).

6. Abstützanordnung (1) gemäß einem der vorhergehenden Ansprüche,
wobei die Abstützanordnung (1) eine Achse (40) und ein Rad (80) umfasst,
wobei die Achse (40) sich in eine Längsrichtung (L) erstreckt,
wobei das Rad (80) eine Felge (81) und einen Reifen (82) mit einer Lauffläche (84) aufweist,
wobei die Achse (40) dazu ausgelegt ist, das Rad (80) mittel oder unmittelbar zu lagern,
wobei die Rekuperationsvorrichtung (20) direkt oder indirekt energietechnisch mit dem Rad verbunden ist.

7. Abstützanordnung (1) gemäß einem der vorhergehenden Ansprüche,
wobei die Rekuperationsvorrichtung (20) eine Rolle (22) aufweist,
wobei die Rolle (22) drehbar um eine Rollenachse (R) gelagert ist,
wobei die Rolle (22) energietechnisch mit dem Rad verbunden ist und/oder verbindbar ist.

8. Abstützanordnung (1) gemäß Anspruch 7,
wobei die Rolle (22) derart angeordnet ist, dass diese durch einen Kontakt mit der Lauffläche (84) des Rades (80) energietechnisch verbindbar und/oder verbunden ist.

9. Abstützanordnung (1) gemäß einem der vorhergehenden Ansprüche,
wobei die Rekuperationsvorrichtung (20) und/oder Teile der Rekuperationsvorrichtung (20) schwenkbar um eine Schwenkachse (S) am Achsabstützelement (10) gelagert ist/sind.

10. Abstützanordnung (1) gemäß einem der vorhergehenden Ansprüche,
wobei die Rollenachse (R) parallel zu der Längsrichtung (L) und/oder zu der Schwenkachse (S) ist.

11. Abstützanordnung (1) gemäß einem der vorhergehenden Ansprüche,
wobei die Rekuperationsvorrichtung (20) oder Teile davon derart schwenkbar gelagert ist/sind, sodass diese in eine Rekuperationsstellung und in eine Leerlaufstellung schwenkbar ist/sind.

12. Abstützanordnung (1) gemäß einem der vorhergehenden Ansprüche,
wobei die Abstützanordnung (1) eine Schwenkvorrichtung (60) umfasst,
wobei die Schwenkvorrichtung (60) dazu ausgelegt ist, die Rekuperationsvorrichtung (20) oder Teile davon relativ zum Achsabstützelement (10) um die Schwenkachse (S) zu verschwenken.

13. Abstützanordnung (1) gemäß Anspruch 12,
wobei die Schwenkvorrichtung (60) einen Luftbalg umfasst,
wobei der Luftbalg insbesondere dazu ausgelegt ist, die Rekuperationsvorrichtung (20) und/oder Teile davon von der Leerlaufstellung in die Rekuperationsstellung zu verschwenken.

14. Abstützanordnung (1) gemäß Anspruch 13,
wobei der Luftbalg zwischen dem Achsabstützelement (10) und der Haltevorrichtung (24) angeordnet ist,
und/oder
wobei der Luftbalg zwischen Teilen der Rekuperationsvorrichtung (20) angeordnet ist.

15. Nutzfahrzeug umfassend eine Abstützvorrichtung gemäß einem der vorhergehenden Ansprüche,
wobei das Nutzfahrzeug ein Tanker oder ein Silo-Fahrzeug ist, insbesondere ein Tankanhänger oder ein Siloanhänger.
